# EUROPÄISCHE PATENTANMELDUNG

(11) **EP 4 783 035 A1**
(43) Veröffentlichungstag der Anmeldung: **29.07.2026**
(21) Anmeldenummer: 26153486.1
(22) Anmeldetag: 22.01.2026
(51) Int. Cl.: G06F 17/18, B60W 50/00

(54) **VERFAHREN ZUM EINSPEICHERN VON VALIDIERUNGSDATEN ZUR VALIDIERUNG VON SYSTEMEN ZUR VERARBEITUNG GROSSER DATENMENGEN**

(30) Priorität: 22.01.2025 DE 102025102276
(71) Anmelder: Robert Bosch GmbH, 70442 Stuttgart (DE)
(72) Erfinder: Spizig, Claus, 70469 Stuttgart (DE)

(57) **Zusammenfassung**

Verfahren zum Einspeichern von Validierungsdaten (23) in einem Datenspeichersystem (12),
- wobei die Validierungsdaten (23) zur Validierung von Systemen zur Verarbeitung großer Datenmengen vorgesehen sind;
- wobei das Datenspeichersystem (12) dazu eingerichtet ist die Validierungsdaten (23) für die Validierung mindestens eines Systems zur Verarbeitung großer Datenmengen bereitzustellen; und
- wobei die Validierungsdaten (23) zumindest teilweise von Sensoren (2) aufgezeichnete Daten umfassen;
aufweisend die folgenden Schritte:
a) Empfangen der Validierungsdaten;
b) Ermitteln (7) von mindestens einer statistischen Eigenschaft der empfangenen Validierungsdaten;
c) Durchführen einer Komprimierung (6) der Validierungsdaten zur Erzeugung von komprimierten Validierungsdaten (11) mit einem verlustbehafteten Komprimierungsverfahren;
d) Ermitteln von mindestens einer statistischen Vergleichseigenschaft;
e) Durchführen eines Vergleichs der mindestens einen statistischen Eigenschaft mit der mindestens einen statistischen Vergleichseigenschaft, wobei durch den Vergleich eine Prüfung erfolgt, ob eine Abweichung zwischen basierend auf den komprimierten Validierungsdaten herstellbaren synthetisierten Validierungsdaten (20) und den in Schritt a) empfangenen Validierungsdaten innerhalb eines vorgegebenen Toleranzbereichs liegt, wobei der Toleranzbereich so gewählt ist, dass Abweichungen erfasst werden, die innerhalb eines Signalrausches liegen, welches durch Eigenschaften mindestens eines Sensors (2), mit dem Validierungsdaten aufgezeichnet wurden, hervorgerufen wurden, wobei der Toleranzbereich weiter so gewählt ist, dass der Abstand zwischen basierend auf den komprimierten Validierungsdaten (11) synthetisierten Validationsdaten (20) und der aufgenommenen Wirklichkeit nicht größer ist als der Abstand zwischen den in Schritt a) empfangenen Validationsdaten von derselben Wirklichkeit; und
f) Einspeichern der komprimierten Validierungsdaten (11) in dem Datenspeichersystem (12), wenn in Schritt e) ermittelt wurde, dass die Abweichung innerhalb des vorgegebenen Toleranzbereiches liegt.

## Beschreibung

### Stand der Technik

Die Erfindung betrifft die Validierung von Systemen zur Verarbeitung großer Datenmengen. Moderne Systeme zur Verarbeitung von Datenmengen, beispielsweise Fahrerassistenzsysteme, verarbeiten heute eine Vielzahl von Sensordaten und sind in der Lage basierend auf diesen Sensordaten komplexe Funktionen durchzuführen, bei denen (teilweise massiv) in die Schnittstelle zwischen dem Fahrer des Fahrzeuges und dem Fahrzeug bzw. den Fahrzeugfunktionen eingegriffen wird. Solche Funktionen können beispielsweise Notbremsassistenzfunktionen sein, die eingreifen, wenn ein Hindernis im Straßenverkehr auftaucht.

Die Auswertung von Sensordaten wird in derartigen Systemen häufig von sehr komplexen Software-Systemen ausgeführt. Bevor solche Systeme im Feld (also im regulären Betrieb) eingesetzt werden können, sind regelmäßig umfangreiche Validierungen erforderlich. Dies gilt regelmäßig auch, wenn nur (verhältnismäßig geringe) Anpassungen an bereits etablierten Systemen erfolgen.

Am Beispiel des Fahrerassistenzsystems sind nach üblicherweise angewendeten Maßstäben tausende Stunden von regulärem Fahrbetrieb eines Fahrzeuges mit einer bestimmten Fahrerassistenzfunktion erforderlich, um eine Freigabe zum Einsatz der jeweiligen Fahrerassistenzfunktion im Feld zu gewährleisten. Aufgrund der Vielzahl von Fahrerassistenzfunktionen, die heute im Einsatz sind, und vor dem Hintergrund der Komplexität der Funktionen ist dies kaum realisierbar. Aus diesem Grund ist ein heute verbreiteter Ansatz Validierungen von Fahrerassistenzfunktionen unter bestimmten Bedingungen auch in Simulationsumgebungen und/oder durch Einspeisen von gespeicherten Validierungsdaten in ein zu testendes Steuergerät für die Ausführung der jeweiligen Fahrerassistenzfunktion durchzuführen. In solchen Simulationsumgebungen oder Steuergeräteprüfvorrichtungen werden eine Vielzahl von (insbesondere gelabelten) Sensordaten verwendet, um ein Fahrerassistenzsystem zu testen und dahingehend zu prüfen, ob es in der durch die Sensordaten repräsentierten Situation richtig reagiert. Solche Sensordaten, die in Simulationsumgebungen verwendet werden können, um Fahrerassistenzsysteme zu testen werden regelmäßig auch als Validierungsdaten bezeichnet. Solche Validierungsdaten müssen üblicherweise Original-Sensordaten beinhalten, wie sie in einem Fahrzeug während einer Testfahrt aufgezeichnet werden. Üblicherweise sind die Anforderungen an solche Validierungsdaten hinsichtlich Ihrer Originalität noch deutlich höher als dies bei Trainingsdaten der Fall ist, die "nur" für das Training von Fahrerassistenzfunktionen verwendet werden. Trainingsdaten werden häufig auch komplett synthetisch erzeugt. Regelmäßig erfolgt eine Erzeugung von Trainingsdaten beispielsweise auch, in dem Daten durch Filter angepasst werden, um zusätzliche Trainingsdatensätze zu erzeugen. Die höheren Anforderungen an Validierungsdaten als an Trainingsdaten gelten, weil durch die Validierung die Freigabe von Fahrerassistenzfunktionen für den Einsatz im Straßenverkehr gegeben wird. Die auf Validierungsdaten basierende Validierung wird also in vielen Fällen auch durchgeführt, um ein auf Trainingsdaten basierende Training von Fahrerassistenzfunktionen bzw. von Steuergeräten für Fahrerassistenzfunktionen zu validieren.

Für die Validierung der Vielzahl von verschiedenen im Markt eingesetzten Fahrerassistenzsystemen sind ganze Rechenzentren voll mit gespeicherten Validierungsdaten erforderlich.

Grundsätzlich wäre es zur Reduktion des Aufwandes zur Bevorratung und Bereitstellung solcher Validierungsdaten sehr wünschenswert, wenn Komprimierungsverfahren für solche Daten verwendet werden könnten. Denkbare Verfahren sind beispielsweise in den Schriften DE 10 2019 214 587 A1, US 11, 356,579 B2 oder EP 3 185 555 A1 beschrieben.

Bisher ist es jedoch nicht möglich, solche Daten zur Validierung der Funktion von Fahrerassistenzsystemen mit effizienten Ansätzen zu komprimieren. Um üblichen Standards für die Validierung von Fahrerassistenzsystemen zu genügen, müssen die eingesetzten Daten üblicherweise bitidentisch dem entsprechen, was im Fahrzeug, bzw. was von den Sensoren der Testfahrzeuge zur Verfügung gestellt wurde. Damit können die Validierungsdaten bisher nur dann verlustbehaftet komprimiert werden, wenn diese auch im Fahrzeug im Feld ebenso verlustbehaftet komprimiert verarbeitet werden. Im Fahrzeug ist eine solche Kompression mit Nachteilen wie zusätzlicher Latenz für Komprimierung & Dekomprimierung, keine Nutzung von CRC-Checksummen zur Absicherung der Ende-zu-Ende-Datenintegrität und Kosten in der Serie für die Komprimierung verbunden.

Hiervon ausgehend ist es Aufgabe der vorliegenden Erfindung, die mit Bezug auf den Stand der Technik geschilderten Probleme zu lindern oder zumindest teilweise zu lösen. Insbesondere soll eine Lösung angegeben werden, mit der es möglich wird, höhere Grade der Komprimierung von Validierungsdaten zu erreichen und so den Aufwand zur Speicherung und Bereitstellung von Validierungsdaten deutlich zu reduzieren.

### Offenbarung der Erfindung

Hier beschrieben wird ein Verfahren zum Einspeichern von Validierungsdaten in einem Datenspeichersystem. Die Validierungsdaten sind zur Validierung von Systemen zur Verarbeitung großer Datenmengen vorgesehen. Bei den Systemen zur Verarbeitung großer Datenmengen kann es sich vorzugsweise um die bereits einleitend erwähnten Fahrerassistenzsysteme handeln. Alternativ kann es sich bei den Systemen zur Verarbeitung großer Datenmengen um medizinische Systeme, Fertigungssysteme oder Systeme zur Durchführung von Fertigungstests, bei denen sehr hochauflösende Kameras verwendet werden, handeln.

Ferner ist das Datenspeichersystem dazu eingerichtet die Validierungsdaten für die Validierung mindestens eines Systems zur Verarbeitung großer Datenmengen bereitzustellen, wobei die Validierungsdaten zumindest teilweise von Sensoren aufgezeichnete Daten umfassen. Beispielsweise kann es sich am Beispiel des Fahrerassistenzsystems um von Sensoren in Fahrzeugen während Testfahrten aufgezeichnete Daten handeln.

Das Verfahren weist die folgenden Schritte auf:
a) Empfangen der Sensrohdaten;
b) Ermitteln von mindestens einer statistischen Eigenschaft der empfangenen Sensorrohdaten;
c) Durchführen einer Komprimierung der Sensorrohdaten zur Erzeugung von komprimierten Sensordaten mit einem verlustbehafteten Komprimierungsverfahren;
d) Ermitteln von mindestens einer statistischen Vergleichseigenschaft der komprimierten Validierungsdaten;
e) Durchführen eines Vergleichs der mindestens einen statistischen Eigenschaft mit der mindestens einen statistischen Vergleichseigenschaft, wobei durch den Vergleich eine Prüfung erfolgt, ob eine Abweichung zwischen basierend auf den komprimierten Sensordaten herstellbaren synthetisierten Sensordaten und den in Schritt a) empfangenen Sensorrohdaten innerhalb eines vorgegebenen Toleranzbereichs liegt, wobei der Toleranzbereich so gewählt ist, dass Abweichungen erfasst werden, die innerhalb eines Signalrausches liegen, welches durch Eigenschaften mindestens eines Sensors, mit dem die Sensorrohdaten aufgezeichnet wurden, hervorgerufen wurden, wobei der Toleranzbereich weiter so gewählt ist, dass der Abstand zwischen synthetisierten Sensordaten und der aufgenommenen Wirklichkeit nicht größer ist als der Abstand zwischen den in Schritt a) empfangenen Sensorrohdaten von derselben Wirklichkeit; und
f) Einspeichern der komprimierten Sensordaten als Teil der Validierungsdaten in dem Datenspeichersystem (12), wenn in Schritt f) ermittelt wurde, dass die Abweichung innerhalb des vorgegebenen Toleranzbereiches liegt.

Bei der mindestens einen statistischen Vergleichseigenschaft in Schritt d) handelt es sich vorzugsweise um die gleiche Eigenschaft, wie die mindestens eine statistische Eigenschaft in Schritt b).

Das in Schritt c) durchgeführte verlustbehaftete Komprimierungsverfahren ist bevorzugt zweiteilig und es umfasst besonders bevorzugt folgende zwei Teilschritte:
c1) Durchführung einer Reduzierung von Rauschanteilen in Sensorrohdaten zur Erzeugung von bereinigten Sensorrohdaten; und
c2) Komprimieren der Sensorrohdaten mit einem verlustfreien reversiblen Komprimierungsverfahren.

Insbesondere erfolgt in Schritt f) das Einspeichern der komprimierten Sensordaten in dem Datenspeichersystem, wenn in Schritte) ermittelt wurde, dass die Abweichung der mindestens einen statistischen Eigenschaft innerhalb des vorgegebenen Toleranzbereichs liegt.

Der Vorteil des erfindungsgemäßen Verfahrens liegt in der Möglichkeit Sensordaten als Teil von Validierungsdaten und insbesondere komprimierte Sensordaten mit deutlich weniger Aufwand als bisher notwendig zu erhalten, die die gleiche Abweichung und damit Qualität aufweisen, wie üblicherweise mittels des mindestens einen Sensors aufgenommene Sensorrohdaten. Mit anderen Worten kann hierdurch der Vorteil und Nachweis erlangt werden, dass sich ein komprimiertes bzw. dekomprimiertes Bild nicht stärker von der Wirklichkeit unterscheidet als ein anderes Bild, das mit einem rauschbehafteten Sensor von der derselben Wirklichkeit gemacht wurde. Hierbei trägt insbesondere der erwähnte Vergleich hinsichtlich des Toleranzbereiches dazu bei, dass die Sensordaten entsprechend derart qualitativ sind, dass sie nach dem Ablegen in dem Datenspeichersystem zur Validierung von Fahrerassistenzsystemen geeignet sind. Sie tragen dabei insbesondere auch den hierfür notwendigen rechtlichen Anforderungen Rechnung. Des Weiteren können, bei der Betrachtung eines Fahrerassistenzsystems, durch das Verfahren die Nachteile einer Komprimierung im Fahrzeug vermieden werden.

Gemäß einer Ausführungsform des Verfahrens wird die statistische Vergleichseigenschaft in Schritt d) mit einem validierten physikalischen Modell mindestens eines Sensors ermittelt.

Insbesondere handelt es sich hierbei um ein validiertes physikalisches Modell des mindestens einen Sensors in dem jeweiligen Betriebspunkt. Hierbei entspricht die mindestens eine statistische Eigenschaft des Sensors vorzugsweise der mindestens einen statistischen Eigenschaft der empfangenen Sensorrohdaten. Bevorzugt entspricht die mindestens eine statistische Vergleichseigenschaft einer Eigenschaft, die synthetische Sensordaten, die basierend auf den komprimierten Validierungsdaten wieder hergestellt wurden, ebenfalls haben.

Ein validiertes physikalisches Modell des mindestens einen Sensors wurde bevorzugt gemäß festgelegten Standards gegenüber dem mindestens einen Sensor validiert, um einen Nachweis zu führen, dass mit dem validierten physikalischen Modell ermittelte statistische Vergleichseigenschaften den statistischen Eigenschaften des Sensors entsprechen.

Besonders bevorzugt ist, wenn das validierte physikalische Modell zur Ermittlung der statistischen Vergleichseigenschaft mit Betriebsdaten des mindestens einen Sensors beaufschlagt wird.

Die Betriebsdaten des mindestens einen Sensors, werden bevorzugt dazu ermittelt den jeweiligen Betriebspunkt des mindestens einem Sensors bei dem validierten physikalischen Modell einzustellen. Bevorzugt entsprechenden diese Betriebsdaten den Sensorrohdaten.

Von Vorteil kann es ferner sein, wenn die mindestens eine statistische Eigenschaft und die mindestens eine statistische Vergleichseigenschaft jeweils eine Verteilung von Grauwerten bzw. Helligkeitswerten in den empfangenen Sensorrohdaten ist.

Dies bezieht sich insbesondere auf Bilddaten (ggf. einzelne Bilder), die in den Sensorrohdaten enthalten sind. Insbesondere kann es sich bei der mindestens einen statistischen Eigenschaft und bei der mindestens einen Vergleichseigenschaft um eine Standardabweichung der Grauwerte bzw. der Helligkeitswerte handeln. Eine weitere statistische Eigenschaft, die im Rahmen der mindestens einen statistischen Eigenschaft berücksichtigt werden kann, kann ein mittlerer Grauwert/Helligkeitswert der Sensorrohdaten (insbesondere eines einzelnen in den Sensorrohdaten enthaltenen Bildes) sein. Vorzugsweise wird die mindestens eine statistische Eigenschaft über alle Pixel der beispielsweise als Bild ausgebildeten Sensorrohdaten ermittelt, so dass jeder Pixel in der mindestens einen statistischen Eigenschaft Niederschlag findet und über die mindestens eine statistische Eigenschaft mit beurteilt wird.

Besonders bevorzugt ist, wenn die Sensorrohdaten mit mindestens einem Bild-, Ultraschall-, Lidar- und/oder Radarsensor, bevorzugt mit mindestens einer Kamera, aufgezeichnet wurden.

Im Beispiel des Fahrerassistenzsystems können die Sensorrohdaten beispielsweise während Testfahrten aufgezeichnet werden. Der Vorteil dieser Ausführungsform ist darin zu sehen, dass das beschriebene Verfahren auf verschiedene Arten von Sensoren und damit Sensorrohdaten anwendbar ist. Weiterhin können durch die Sensorrohdaten verschiedener Sensortypen verschiedene Arten von Daten gesammelt und für die Validierung zur Verfügung gestellt werden, was insgesamt die Güte des Verfahrens und damit der erzeugten Validierungsdaten enthaltend komprimierte Sensordaten erhöht.

Das Empfangen von Sensorrohdaten in Schritt a) beschreibt insbesondere den Vorgang, dass eine zur Durchführung des beschriebenen Verfahrens eingerichtete Vorrichtung die Validierungsdaten bzw. die Sensorrohdaten von dem verwendeten Sensor/den verwendeten Sensoren empfängt. Die Vorrichtung kann beispielsweise in einem Fahrzeug mitgeführt werden, welches zur Durchführung des beschriebenen Verfahrens eingesetzt wird. In einer solchen Vorrichtung können auch weitere Schritte des beschriebenen Verfahrens durchgeführt werden - insbesondere die Schritte b), c), d) und e). Gegebenenfalls kann die Erzeugung der Sensorrohdaten mit dem Sensor/den Sensoren auch Bestandteil des Verfahrens sein, so dass das Empfangen von Sensorrohdaten in Schritt a) insbesondere auch eine Erzeugung von Sensorrohdaten mit mindestens einem Sensor umfassen kann. Diese Sensorrohdaten können dann unmittelbar mit dem beschriebenen Verfahren verarbeitet werden. In Ausführungsvarianten ist es auch möglich, dass die Sensorrohdaten vor Schritt a) zwischengespeichert wurden und dann in Schritt a) aus einem Zwischenspeicher "empfangen" werden.

Gemäß einer weiteren Ausführungsform umfassen die Validierungsdaten neben den Sensordaten weitere Daten, die in dem System parallel zu den Sensorrohdaten aufgezeichnet wurden. Im Beispiel des Fahrerassistenzsystems können die weiteren Daten in dem Fahrzeug während Testfahrten aufgezeichnet werden. Derartige weitere Daten können beispielsweise Innenraumdaten über einen Zustand des Fahrers und/oder der Insassen des Fahrzeugs sein. Zum Beispiel kann es sich bei den Daten um Bilddaten einer Innenraumkamera handeln, die einen Konzentrationszustand des Fahrers erfasst. Durch die Heranziehung dieser zusätzlichen Daten, kann die Qualität der Validierungsdaten weiter verbessert werden.

Von Vorteil kann es ferner sein, wenn gemäß einer Ausführungsform der in Schritt e) verwendete Toleranzbereich so gewählt ist, dass Abweichungen erfasst werden, die innerhalb eines Schrot-Rauschens von Sensorrohdaten liegen, dien Schritt a) empfangen wurden.

Unter dem Begriff "Schrot-Rauschen" im Sinne der Erfindung kann ein spezifisches Rauschmuster verstanden werden, das durch die Umwandlung von Photonen in Elektronen in einem Sensor entsteht und den Pixelwert nach eine Poisson Verteilung verändert, wobei die Größe der Änderung abhängig von der Belichtungsstärke ist.

Durch diese Ausführungsform kann sichergestellt werden, dass die komprimierten Sensordaten eine ausreichende Qualität aufweisen, um hieraus (später) synthetisierte Sensordaten erzeugen zu können.

Weiterhin vorteilhaft ist, wenn der mindestens eine Sensor zum Ermitteln der Sensorrohdaten eine Charakteristik aufweist, gemäß welcher der mindestens eine Sensor je nach Lichteinfall zwischen unterschiedlichen Belichtungsdauern je Pixel umschaltet, wobei der in Schritt e) verwendete Toleranzbereich und/oder die in Schritt d) ermittelte Vergleichseigenschaft unter Berücksichtigung dieser Charakteristik festgelegt ist.

Dieser Ausführungsform liegt der Ansatz zugrunde, dass der bereits erwähnte Toleranzbereich unterschiedlich helle bzw. dunkle Pixel berücksichtigt und somit genauer an die jeweiligen Sensorrohdaten anpassbar ist. Durch die Beaufschlagen eines validierten physikalischen Modells mit Betriebsdaten des mindestens einen Sensors, können die unterschiedlichen Belichtungsdauern für die Erstellung des validierten physikalischen Modells berücksichtigt werden.

Darüber hinaus bevorzugt ist, wenn durch die Einhaltung des in Schritt e) verwendeten Toleranzbereiches für jedes Pixel von Sensordaten in den Validierungsdaten sichergestellt ist, dass die aus den in Schritt g) eingespeicherten Validierungsdaten ermittelten synthetisierten Sensordaten genauso nahe an der Wirklichkeit liegen wie originale Sensorrohdaten, die in Schritt a) empfangenen wurden.

Durch dieses Kriterium ist sichergestellt, dass die Sensordaten, die aus den in Schritt f) eingespeicherten Validierungsdaten ermittelt werden, als direktes Abbildung bzw. Pendant zu den Sensorrohdaten angesehen werden können, wodurch sie für die Validierung des mindestens einen Systems herangezogen werden dürfen. Dies ist zu einem beliebig kleinen und unterschiedlichen Zeitpunkt ermöglicht, wodurch die Daten auch für eine Überprüfung von sicherheitskritischen und/oder KI-basierten Systemen nutzbar sind, bei denen höhere Sicherheitsstufen und -anforderungen gelten als bei "reinen" Komfort-Systemen.

Weiter vorteilhaft ist, wenn durch Überprüfung der Einhaltung des Toleranzbereichs für jedes Pixel die Verwendung auch bei Systemen, die anfällig für kleinste Veränderungen im Rauschverhalten sind, möglich ist. Dies stellt die bereits vorstehend erwähnte Anwendbarkeit des Verfahrens bei sicherheitskritischen und/oder KI-basierten Fahrerassistenzsystemen sicher, wodurch die ermittelten und abgespeicherten Sensordaten in den Validierungsdaten für ein breiteres Spektrum an Systemen heranziehbar sind.

Darüber hinaus bevorzugt ist, wenn es sich bei dem System um ein Fahrerassistenzsystem handelt, dass zumindest die Schritte a) bis e) in einem Fahrzeug während einer Testfahrt zum Aufzeichnen von Sensorrohdaten für die Erstellung von Validierungsdaten durchgeführt werden. Ergänzend können jedoch nicht nur Testfahrten, sondern auch normale Fahrten, beispielsweise von Mitarbeitern, die über einen Firmenwagen verfügen, für die erwähnte Erstellung von Validierungsdaten herangezogen werden. Dies erhöht die Menge an verfügbaren Validierungsdaten, die vorteilhaft für die Validierung des mindestens einen Fahrerassistenzsystems herangezogen werden können.

Um die Validierungsdaten langfristig zu speichern, umfasst Schritt g) einen Versand der komprimierten Sensordaten als Teil der Validierungsdaten an ein stationäres Datenspeichersystem. Im Beispiel des Fahrerassistenzsystems kann der Versand aus einem Fahrzeug zur Durchführung einer Testfahrt erfolgen. Alternativ ist auch ein drahtloser Versand der Daten über eine Funkschnittstelle möglich. Bevorzugt erfolgt der Versand der komprimierten Sensordaten als Teil der Validierungsdaten jedoch in Form von Festplatten, die die komprimierten Sensordaten enthalten und aus dem System (bspw. aus einem Fahrzeug, in dem das Verfahren ausgeführt wird) physikalisch ausgebaut werden. Anschließend werden die Festplatten dem stationären Datenspeichersystem zugeführt. Bei dem stationären Datenspeichersystem kann es sich beispielsweise um eine stationäre Festplatten-Farm handeln, in der die Daten aufbewahrt werden.

Darüber hinaus bevorzugt ist, wenn in Schritt e) ein Vergleichsprotokoll erstellt wird, welches protokolliert, dass der vorgegebene Toleranzbereich eingehalten wird, wobei das Vergleichsprotokoll in Schritt f) zusammen mit den komprimierten Sensordaten eingespeichert wird.

Das Vergleichsprotokoll dient vorteilhafterweise dazu, nachzuweisen, dass die komprimierten Validierungsdaten für eine Validierung des mindestens einen Fahrerassistenzsystems geeignet und zugelassen sind.

Es wird ferner ein Verfahren zur Validierung eines Fahrerassistenzsystems angegeben, aufweisend folgende Schritte;
a. Empfangen von Validierungsdaten umfassend komprimierte Sensordaten aus einem Datenspeichersystem;
b. Erstellen von synthetisierten Sensordaten aus den komprimierten Sensordaten,
c. Durchführen von Tests zur Validierung des Fahrerassistenzsystems basierend auf den Validierungsdaten und den synthetisierten Sensordaten,
wobei die in Schritt a) empfangenen Validierungsdaten gemäß dem bereits vorstehend erwähnten Verfahren in dem Datenspeichersystem eingespeichert wurden.

Auch hier beschrieben werden soll ein System zur Validierung von mindestens einem Fahrerassistenzsystem, welches zur Durchführung des vorstehend beschriebenen Verfahrens eingerichtet ist.

Die im Hinblick auf die Verfahren aufgeführten Vorteile und bevorzugten Ausgestaltungen sind sinngemäß auf das System zu übertragen und umgekehrt.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch und beispielhaft:
- Fig. 1: ein Verfahren zum Einspeichern von Validierungsdaten am Beispiel eines Fahrerassistenzsystems, bei welchem ein direkter Vergleich der empfangenen Daten und synthetisierten Daten erfolgt
- Fig. 2:: eine erste Ausführungsvariante des hier beschriebenen Verfahrens, bei welchem statische Eigenschaften von Sensorrohdaten untersucht werden;
- Fig. 3:: eine zweite Ausführungsvariante des hier beschriebenen Verfahrens, bei welchem statistische Eigenschaften von Sensorrohdaten untersucht werden; und
- Fig. 4:: ein Verfahren zur Validierung eines Systems zur Verarbeitung großer Datenmengen am Beispiel eines Fahrerassistenzsystems mit derartigen Validierungsdaten.

In den Figuren sind gleiche bzw. gleichwirkende Bauteile stets mit den gleichen Bezugszeichen dargestellt.

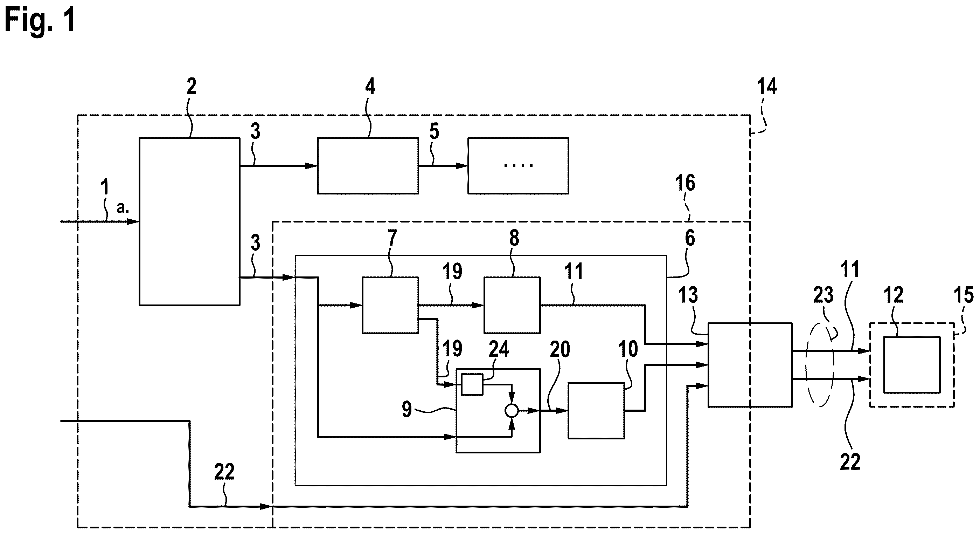

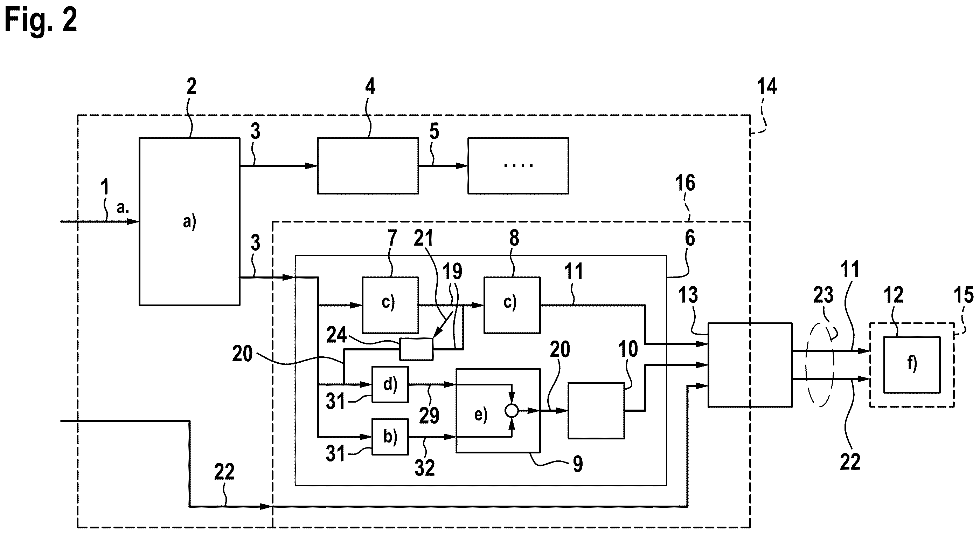

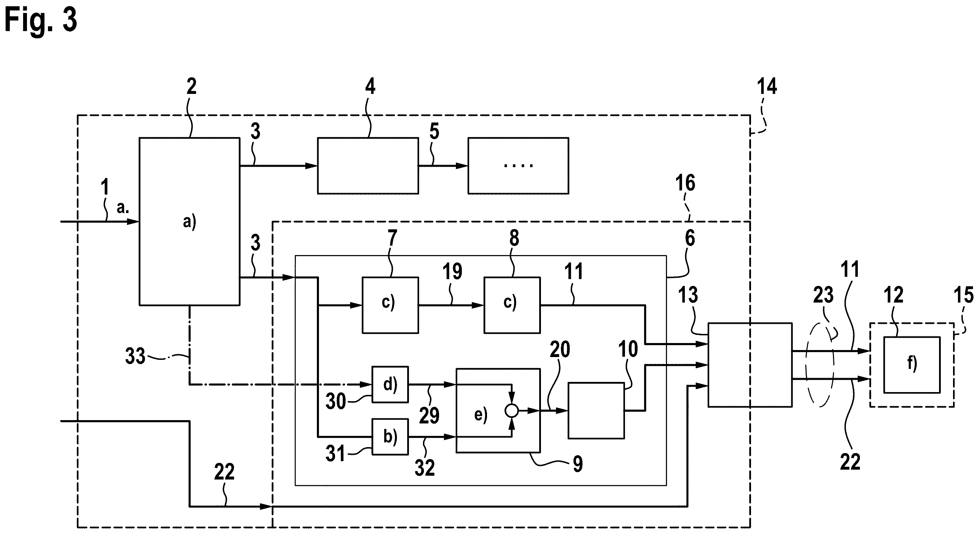

Fig. 1 zeigt ein Blockdiagramm eines beschriebenen Verfahrens zur Bereitstellung von Validierungsdaten. Die Fig. 1 wird hier zunächst erläutert. Die Fig. 2 und 3 zeigen das hier beschriebene Verfahren als Weiterentwicklung des gemäß der Fig. 1 vorgestellten Verfahrens. Bei der Erläuterung der Fig. 2 und 3 wird jeweils auf Unterschiede gegenüber der Fig. 1 bzw. zwischen den Fig. 2 und 3 eingegangen. Die Erläuterungen für die Fig. 1 gelten dementsprechend (soweit) entsprechend auch für die Fig. 2 und 3.

Bei dem Verfahren wird die reale Umgebung 1 von einem Sensor 2 erfasst. Bei dem Sensor 2 kann es sich hierbei beispielsweise um einen Bild-, Ultraschall-, Lidar- und/oder Radarsensor handeln. Bevorzugt handelt es sich bei dem Sensor 2 um eine Kamera, die als Sensorrohdaten 3 Bilddaten von der realen Umgebung 1 aufnimmt. Der Sensor 2 kann aber auch ein Sensor in einem medizinischen System (bspw. einem Diagnosesystem) sein, mit dem eine große Menge von Daten erfasst werden, die bspw. für medizinische Diagnosezwecke verwendet werden. Grundsätzlich ist das hier beschriebene Verfahren zur Bereitstellung von Validierungsdaten für unterschiedlichste Systeme zur Verarbeitung großer Datenmengen geeignet, wobei das Verfahren hier anhand von Fahrerassistenzsystemen erläutert wird.

Die durch den Sensor 2 aufgenommene reale Umgebung 1 wird in Form der Sensorrohdaten 3 einerseits zu einem Fahrerassistenzsystem 4 übermittelt, wo sie für eine Fahrerassistenzfunktion 5 herangezogen werden können. Andererseits werden die Sensorrohdaten 3 auch einer Komprimierung 6 unterzogen, um sie als komprimierte Sensordaten 11 als Teil von Validierungsdaten 23 mittels einer Übertragungsschnittstelle 13 in einem Datenspeichersystem 12 eines Rechenzentrums 15 abzuspeichern. Die Übertragungsschnittstelle 13 kann eine Funkschnittstelle sein. Alternativ hierzu kann die Speicherung auch ohne eine Übertragung mittels der Übertragungsschnittstelle 13 auf dem Datenspeichersystem 12, z.B. einer Festplatte, erfolgen. Beispielsweise kann eine Festplatte mit Daten aus einem Testfahrzeug (physikalisch) entnommen und zum Einlesen in das Datenspeichersystem 12 (physikalisch) in ein Rechenzentrum verbracht werden.

Parallel können zusätzlich weitere Daten 22 an die Funkschnittstelle 13 übertragen werden, die dann in Form von Validierungsdaten 23 auf dem Datenspeichersystem 12 im Rechenzentrum 15 hinterlegt werden. Solche weiteren Daten 22, können bspw. Metadaten zu den Sensordaten sein. Solche weiteren Daten 22 können insbesondere alle Arten von Daten sein, die zum Labeling der Sensordaten verwendet werden können. Alternativ hierzu können die weiteren Daten 22 auch wie bereits vorstehend beschrieben in Form einer Festplatte zum Rechenzentrum 15 verbracht werden.

Diese Art der Bereitstellung von Validierungsdaten ermöglicht eine im Vergleich zum Stand der Technik und hinsichtlich des notwendigen Speicherplatzes und Aufwands bessere Lösung.

Gemäß Fig. 1 wird ein Verfahren zur Komprimierung der Validierungsdaten (bzw. der Sensorrohdaten 3 in den Validierungsdaten) beschrieben, auf welches das hier beschriebene Verfahren aufsetzt. Zum besseren Verständnis des hier beschriebenen Verfahrens wird hier zunächst das Verfahren gemäß Fig. 1 erläutert.

Im Rahmen der Komprimierung 6 erfolgt zunächst eine Rausch-Reduktion 7, die auf die Sensorrohdaten 3 angewandt wird. Die nach der Rausch-Reduktion 7 vorliegenden bereinigten Sensordaten 19 werden anschließend einerseits einer reversiblen verlustfreien Komprimierung 8 unterzogen. Das Komprimieren der Sensorrohdaten 3 erfolgt also bevorzugt in zwei Schritten. Die Rausch-Reduktion 7 ist ein erster Schritt, in welchem ein Informationsverlust in den Sensorrohdaten 3 auftritt, in dem das Rauschen entfernt wird. Die verlustfreie Komprimierung 8 ist ein zweiter Schritt.

Neben der Komprimierung 8, werden die bereinigten Sensordaten 19 einem Vergleicher 9 zugeführt. Teil des Vergleichers 9 ist hier ein Synthetisierer 24, der den bereinigten Sensordaten 11, ein synthetisiertes Rauschen 21 hinzufügt. Anschließend werden die bereinigten Sensordaten 19 (inklusive dem hinzugefügten synthetisierten Rauschen 21) mit den Sensorrohdaten 3 verglichen und ein Vergleichsprotokoll 10 wird erstellt. Das Vergleichsprotokoll 10 gibt wieder, wie sehr die bereinigten Sensordaten 19, denen das Rauschen hinzugefügt wurde, den ursprünglich erfassten Sensorrohdaten 3 entsprechen. Mit anderen Worten gibt das Vergleichsprotokoll 10 an, ob ein vorgegebener Toleranzbereich eingehalten wurde. Das Vergleichsprotokoll 10 wird bevorzugt anschließend ebenfalls im Datenspeichersystem 12 des Rechenzentrums 15 hinterlegt.

Gemäß dem in den Fig. 2 und 3 beschriebenen hier behandelten Verfahren zur Komprimierung der Validierungsdaten (bzw. der Sensorrohdaten 3 in den Validierungsdaten) wurde dieser Ansatz weiterentwickelt. Insbesondere wird eine Vorgehensweise vorgestellt, gemäß welcher der Rechenaufwand zur Durchführung des Vergleichs in dem Vergleicher 9 erheblich reduziert ist.

Ziel des beschriebenen Verfahrens ist es insbesondere durch das Vergleichsprotokoll 10 einen Nachweis führen zu können, dass basierend auf den komprimierten Sensordaten 11 bzw. basierend auf den Validierungsdaten 23 erstellte synthetisierte Sensordaten 20 in ihrer Qualität genauso gut sind, wie wenn die vollständigen gemäß Schritt a) erfassten Sensorrohdaten 3 ohne zwischenzeitliche Komprimierung 6 und Rausch-Reduktion 7 verwendet werden würden.

Dem hier beschriebenen Verfahren liegt die Erkenntnis zu Grunde, dass dieser Nachweis nicht durch einen unmittelbaren Vergleich der Sensorrohdaten 3 und der synthetisierten Sensordaten 20 erfolgen muss, sondern es auch möglich ist statistische Eigenschaften 32 der Sensorrohdaten 3 und der synthetisierten Sensordaten 20 miteinander zu vergleichen, um diesen Nachweis zu führen. Solche statistischen Eigenschaften 32 der Sensorrohdaten 3 werden mit der statistischen Datenauswertung 31 erzeugt, um diese in dem Vergleicher 9 mit statistischen Vergleichseigenschaften 29 zu vergleichen und ein Vergleichsprotokoll 10 anlegen zu können. Mit dem Vergleichsprotokoll 10 kann der Nachweis geführt werden, dass basierend auf den komprimierten Sensordaten 11/Validierungsdaten erstellte synthetisierte Sensordaten 20/Validierungsdaten in ihrer Qualität genauso gut sind, wie wenn die vollständigen erfassten Sensorrohdaten 3 ohne zwischenzeitliche Komprimierung 6 und Rausch-Reduktion 7 verwendet werden würden.

Die Fig. 2 und 3 zeigen zwei unterschiedliche Ansätze, mit welchen mindestens eine statistische Vergleichseigenschaft 29, insbesondere mehrere statistischen Vergleichseigenschaften 29, ermittelt werden kann. Die einzelnen Verfahrensschritte a) bis f) sind in den Fig. 2 und 3 den jeweiligen Komponenten zugeordnet, mit denen die einzelnen Verfahrensschritte ausgeführt werden.

Gemäß dem in den Fig. 2 gezeigten Ansatz, werden die bereinigten Sensordaten 19/Validierungsdaten einem Synthetisierer 24 zugeführt, der ein synthetisiertes Rauschen 21 hinzufügt. So entstehen synthetisierte Sensordaten 20. Mit Hilfe einer statistischen Datenauswertung 31 wird dann mindestens eine statistische Vergleichseigenschaft 29 erzeugt, die verwendet werden kann, um den Vergleich mit dem Vergleicher 9 auszuführen.

Parallel hierzu werden die Sensorrohdaten 3 ebenfalls einer statistischen Datenauswertung 31 zugeführt. Hier erfolgt dann die Ermittlung zumindest einer statistischen Eigenschaft 32 der Sensorrohdaten 3. Die ermittelte zumindest eine statistischen Eigenschaft 32 kann anschließend ebenfalls dazu verwendet werden, um den Vergleich mit dem Vergleicher 9 auszuführen. Hierzu werden die mindestens eine statistische Eigenschaft 32 sowie die mindestens eine statistische Vergleichseigenschaft 29 dem Vergleicher 9 zugeführt. Bevorzugt entspricht die mindestens eine statistische Eigenschaft 32 der mindestens einen statistischen Vergleichseigenschaft 29, so dass ein aussagekräftiger Vergleich stattfinden kann. In dem Vergleicher 9 erfolgt nun eine Prüfung, ob eine Abweichung zwischen basierend auf den komprimierten Sensordaten/Validierungsdaten 11 herstellbaren synthetisierten Sensordaten 20 und den empfangenen Validierungsdaten (bzw. der Sensorrohdaten 3 in den Validierungsdaten) innerhalb eines vorgegebenen Toleranzbereichs liegt. Hierbei ist der Toleranzbereich so gewählt, dass Abweichungen erfasst werden, die innerhalb eines Signalrausches liegen, welches durch Eigenschaften mindestens eines Sensors 2, mit dem Validierungsdaten aufgezeichnet wurden, hervorgerufen wurden, wobei der Toleranzbereich weiter so gewählt ist, dass der Abstand zwischen den synthetisierten Sensordaten 20 und der aufgenommenen Wirklichkeit nicht größer ist als der Abstand zwischen den in Schritt a) empfangenen Sensorrohdaten 3 in den Validierungsdaten) von derselben Wirklichkeit.

Nach dem Vergleich wird ein Vergleichsprotokoll 10 erstellt, welches wiedergibt, ob und dass der Toleranzbereich eingehalten wurde. Das Vergleichsprotokoll 10 wird bevorzugt anschließend ebenfalls im Datenspeichersystem 12 des Rechenzentrums 15 hinterlegt.

Der in der Fig. 3 vorgestellte Ansatz ist für die praktische Durchführung noch weiter vereinfacht. Die mindestens eine statistische Vergleichseigenschaft 29 wird hier mit Hilfe eines validierten physikalischen Modells 30 des Sensors 2 erstellt. Mit Hilfe des validierten physikalischen Modells 30 wird ermittelt, welche Art und welcher Umfang von Rauschen 2 durch den Sensor 2 in die Sensorrohdaten 3 gelangt. Gemäß der Ausführungsvariante nach Fig. 3 wird also letztlich geprüft, ob das Rauschen, welches mittels der Rauschreduktion 7 aus Sensorrohdaten 3 entfernt wurde, nach Art und Umfang einem Rauschen entspricht, welches durch Sensor 2 in die Sensorrohdaten 3 gelangt ist.

Durch die Ermittlung der mindestens einen statistischen Vergleichseigenschaft 29 mittels des validierten physikalischen Modells 30 des Sensors 2 ist eine deutliche Vereinfachung der praktischen Durchführung im Vergleich zum in Fig. 2 erläuterten Ansatz erreicht, da keine statistischen Datenauswertung 31 der einem Synthetisierer 24 zugeführten bereinigten Sensordaten 19/Validierungsdaten erfolgen muss. Ebenso entfällt das Hinzufügen des synthetisierten Rauschens 21. Bevorzugt erhält das validierte physikalische Modell 30 Betriebsdaten 33 des mindestens einen Sensors 2 als Eingangsgröße. Besonders bevorzugt wird das validierte physikalische Modell 30 mit den Betriebsdaten 33 des mindestens einen Sensors 2, um das Rauschverhalten des Sensors 2 zur Erstellung der statistischen Vergleichseigenschaft 29 nachbilden zu können.

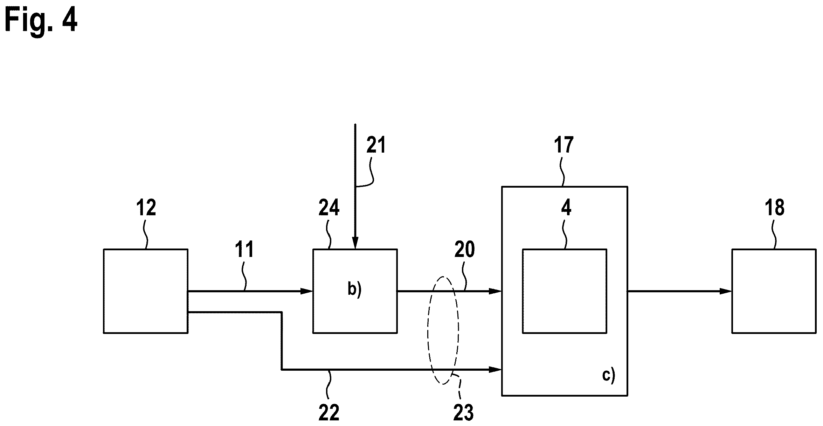

Die Betriebsdaten 33 können insbesondere Helligkeitswerte der mit dem Sensor erfasste Daten (Bilder sein). Die Betriebsdaten 33 können insbesondere auch den Sensorrohdaten 3 entsprechen, wobei dann bevorzugt zur Ermittlung der statistischen Vergleichseigenschaft 29 durch das validierte physikalische Modell (nur) Grauwerte/Helligkeitswerte in den Sensorrohdaten 3 verwendet werden. Besonders bevorzugt geschieht dies regelmäßig wiederholt (besonders bevorzugt für jedes und/oder für eine Vielzahl von in den Sensorrohdaten enthaltenen Bildern) jeweils einzeln. Weiter bevorzugt geschieht dies sogar Pixelweise für jeden Pixel und/oder für Pixelgruppen von Bildern in den Sensorrohdaten einzeln. So können unterschiedliche Belichtungsdauern von Pixeln innerhalb eines Bildes in den Sensorrohdaten zur Ermittlung der mindestens einen statistischen Vergleichseigenschaft berücksichtigt werden. Fig. 4 zeigt ein Blockschaltbild eines Verfahrens zur Validierung eines Systems zur Verarbeitung großer Datenmengen am Beispiel eines Fahrerassistenzsystems mit derartigen gemäß dem mit Bezug zur Fig. 1, 2 und 3 erläuterten Verfahrens ermittelten Validierungsdaten. Die Schritte b. und c.) dieses Verfahrens sind in der Fig. 4 markiert. Der Schritt a. entspricht im Wesentlichen dem vorstehend anhand der Fig. 1 bis 3 erläuterten Verfahren zum Einspeichern von Validierungsdaten. Der Schritt a. ist dementsprechend in den Fig. 1 bis 3 dargestellt.

Zum Validieren eines Systems zur Verarbeitung großer Datenmengen werden die im Datenspeichersystem 12 hinterlegten Validierungsdaten 23 empfangen. Im nächsten Schritt erfolgt das Erstellen 24 von synthetisierten Sensordaten 20 aus den komprimierten Sensordaten 11 in den Validierungsdaten 23. Dies geschieht durch die Hinzufügung einer synthetisierten statistischen Eigenschaft 21, beispielsweise eines synthetisierten Grauwertes, einer synthetisierten Verteilung von Grauwerten oder eines synthetisierten Rauschens. Die synthetisierten Sensordaten 20 entsprechen in einer für die Validierung ausreichenden Qualität den Sensorrohdaten 3, die z.B. ebenfalls immer rauschbehaftet sind.

Die derart "aufbereiteten" bzw. synthetisierten Sensordaten 20 werden dann i einer Situationssimulation oder einem Steuergeräteprüfstand 17 zugeführt. Die Situationssimulation oder der Steuergeräteprüfstand 17 dient einer Simulation bzw. einer Validierung eines Fahrerassistenzsystems 4. Hierbei können beispielsweise Notbrems-Szenarien simuliert und entsprechend das Fahrerassistenzsystem 4 dahingehend validiert werden. Bei den synthetisierten Sensordaten 20 handelt es sich dabei vorzugsweise um Daten, beispielsweise Bilddaten, die Szenarien enthalten, in denen eine Notbremsung des und durch das Fahrerassistenzsystem 4 eingeleitet werden soll.

Diese Simulation bzw. dieser Steuergeräteprüfstand führt anschließend zu einem Validierungsergebnis 18, das angibt, ob die Validierung des Fahrerassistenzsystems 4 erfolgreich war oder nicht und gibt Größen zur Beurteilung der Leistungsfähigkeit des Systems aus.

## Patentansprüche

1. Verfahren zum Einspeichern von Validierungsdaten (23) in einem Datenspeichersystem (12),
- wobei die Validierungsdaten (23) zur Validierung von Systemen zur Verarbeitung großer Datenmengen vorgesehen sind;
- wobei das Datenspeichersystem (12) dazu eingerichtet ist die Validierungsdaten (23) für die Validierung mindestens eines Systems zur Verarbeitung großer Datenmengen bereitzustellen; und
- wobei die Validierungsdaten (23) zumindest teilweise von Sensoren (2) aufgezeichnete Sensordaten (3,11,20) umfassen;
aufweisend die folgenden Schritte:
a) Empfangen von Sensorrohdaten (3);
b) Ermitteln (7) von mindestens einer statistischen Eigenschaft (32) der empfangenen Sensorrohdaten (3);
c) Durchführen einer Komprimierung (6) der Sensorrohdaten (3) zur Erzeugung von komprimierten Sensordaten (11) mit einem verlustbehafteten Komprimierungsverfahren;
d) Ermitteln von mindestens einer statistischen Vergleichseigenschaft (29);
e) Durchführen eines Vergleichs der mindestens einen statistischen Eigenschaft (32) mit der mindestens einen statistischen Vergleichseigenschaft (29), wobei durch den Vergleich eine Prüfung erfolgt, ob eine Abweichung zwischen basierend auf den komprimierten Sensordaten herstellbaren synthetisierten Sensordaten (20) und den in Schritt a) empfangenen Sensorrohdaten innerhalb eines vorgegebenen Toleranzbereichs liegt, wobei der Toleranzbereich so gewählt ist, dass Abweichungen erfasst werden, die innerhalb eines Signalrausches liegen, welches durch Eigenschaften mindestens eines Sensors (2), mit dem die Sensorrohdaten (3) aufgezeichnet wurden, hervorgerufen wurden, wobei der Toleranzbereich weiter so gewählt ist, dass der Abstand zwischen basierend auf den komprimierten Sensordaten (11) synthetisierten Sensordaten (20) und der aufgenommenen Wirklichkeit nicht größer ist als der Abstand zwischen den in Schritt a) empfangenen Sensorrohdaten (3)von derselben Wirklichkeit; und
f) Einspeichern der komprimierten Sensordaten (11) als Teil der Validierungsdaten (23) in dem Datenspeichersystem (12), wenn in Schritt e) ermittelt wurde, dass die Abweichung innerhalb des vorgegebenen Toleranzbereiches liegt.

2. Verfahren nach Anspruch 1, wobei die statistische Vergleichseigenschaft (29) in Schritt d) mit einem validierten physikalischen Modell (30) mindestens eines Sensors (2) ermittelt wird.

3. Verfahren nach Anspruch 2, wobei das validierte physikalische Modell (30) zur Ermittlung der statistischen Vergleichseigenschaft (29) mit Betriebsdaten (33) des mindestens einen Sensors (2) beaufschlagt wird.

4. Verfahren nach Anspruch 1, wobei die statistische Vergleichseigenschaft (29) eine statistische Eigenschaft von synthetisierten Sensordaten (20) ist, die aus den in Schritt c) erzeugten komprimierten Sensordaten (11) erzeugt wurden.

5. Verfahren nach einem der vorhergehenden Ansprüche, wobei die mindestens eine statistische Eigenschaft und die mindestens eine statistische Vergleichseigenschaft jeweils eine Verteilung von Grauwerten und/oder Helligkeitswerten in den empfangenen Sensorrohdaten (3) ist.

6. Verfahren nach einem der vorhergehenden Ansprüche, wobei die Sensorrohdaten (3) mit mindestens einem Bild-,Ultraschall-, Lidar- und/oder Radarsensor, bevorzugt mit mindestens einer Kamera, aufgezeichnet wurden.

7. Verfahren nach einem der vorhergehenden Ansprüche, wobei die Validierungsdaten (23) weitere Daten umfassen, die in dem System parallel zu den Sensorrohdaten (3) aufgezeichnet wurden.

8. Verfahren nach einem der vorhergehenden Ansprüche, wobei der in Schritt e) verwendete Toleranzbereich so gewählt ist, dass Abweichungen erfasst werden, die innerhalb eines Schrot-Rauschens von Sensorrohdaten (3) liegen, die in Schritt a) empfangen wurden.

9. Verfahren nach einem der vorhergehenden Ansprüche, wobei der mindestens eine Sensor (2) zum Ermitteln der Sensorrohdaten (3) eine Charakteristik aufweist gemäß welcher der mindestens eine Sensor (2) je nach Lichteinfall zwischen unterschiedlichen Belichtungsdauern je Pixel umschaltet , wobei der in Schritt e) verwendete Toleranzbereich und/oder die in Schritt d) ermittelte Vergleichseigenschaft (29) unter Berücksichtigung dieser Charakteristik festgelegt ist.

10. Verfahren nach einem der vorhergehenden Ansprüche, wobei durch die Einhaltung des in Schritt e) verwendeten Toleranzbereichs für jedes Pixel von Sensordaten (20) in den Validierungsdaten sichergestellt ist, dass die aus den in Schritt f) eingespeicherten Validierungsdaten ermittelten synthetisierten Validierungsdaten (20) genauso nahe an der Wirklichkeit liegen wie originale Sensorrohdaten (3), die T in Schritt a) empfangen wurden.

11. Verfahren nach einem der vorhergehenden Ansprüche, wobei das System zur Verarbeitung großer Datenmengen ein Fahrerassistenzsystem ist und zumindest die Schritte a) bis e) in einem Fahrzeug während einer Testfahrt zum Aufzeichnen von Sensorrohdaten (3) für die Erstellung von Validierungsdaten durchgeführt werden.

12. Verfahren nach einem der vorhergehenden Ansprüche, wobei Schritt f) einen Versand der komprimierten Validierungsdaten (11) an ein stationäres Datenspeichersystem (12) umfasst.

13. Verfahren nach einem der vorhergehenden Ansprüche, wobei die komprimierten Sensordaten (11) aus Schritt c) drahtlos aus dem System übertragen werden.

14. Verfahren nach einem der vorhergehenden Ansprüche, wobei in Schritt e) ein Vergleichsprotokoll (10) erstellt wird, welches protokolliert, dass der vorgegebene Toleranzbereich eingehalten wird, wobei das Vergleichsprotokoll in Schritt f) zusammen mit den komprimierten Sensordaten (11) eingespeichert wird.

15. Verfahren zur Validierung eines Systems zur Verarbeitung großer Datenmengen aufweisend folgende Schritte;
a. Empfangen von Validierungsdaten (23) umfassend komprimierte Sensordaten (11) aus einem Datenspeichersystem (12);
b. Erstellen von synthetisierten Sensordaten (20) aus den komprimierten Sensordaten (11),
c. Durchführen von Tests zur Validierung des Systems zur Verarbeitung großer Datenmengen basierend auf den Validierungsdaten (23) und den synthetisierten Sensordaten (20),
wobei die in Schritt a) empfangenen Validierungsdaten (23) gemäß einem Verfahren nach einem der vorhergehenden Ansprüche in dem Datenspeichersystem (12) eingespeichert wurden.

16. System zur Validierung eines Systems zur Verarbeitung großer Datenmengen eingerichtet zur Durchführung des Verfahrens nach Anspruch 15.
